# EUROPÄISCHE PATENTSCHRIFT

(11) **EP 3 517 800 B1**
(45) Veröffentlichungstag und Bekanntmachung des Hinweises auf die Patenterteilung: **13.11.2024**
(21) Anmeldenummer: 19153743.0
(22) Anmeldetag: 25.01.2019
(51) Int. Cl.: F16F 1/368, F16F 1/42, F16F 1/13

(54) **BIEGEFEDERELEMENT AUS FASERKUNSTSTOFFVERBUNDMATERIAL**
FLEXING SPRING ELEMENT MADE FROM A FIBRE PLASTIC COMPOSITE MATERIAL
ÉLÉMENT À RESSORT DE FLEXION CONSTITUÉ D'UN MATÉRIAU COMPOSITE À BASE DE FIBRES SYNTHÉTIQUES

(30) Priorität: 25.01.2018 DE 102018101737
(43) Veröffentlichungstag der Anmeldung: 31.07.2019
(73) Patentinhaber: DANTO Invention GmbH & Co. KG, 64589 Stockstadt am Rhein (DE); Rheinmetall Invent GmbH, 41460 Neuss (DE)
(72) Erfinder: Keller, Tobias, 67596 Dittelsheim-Heßloch (DE)
(74) Vertreter: Habermann Intellectual Property Partnerschaft von Patentanwälten mbB

(56) Entgegenhaltungen:
- EP-A1- 2 990 684
- WO-A1-85/00207
- DE-A1- 102008 036 445
- DE-A1- 102013 223 038
- JP-A- S5 769 125
- US-A- 4 763 882

## Beschreibung

Die Erfindung betrifft ein Biegefederelement mit einem Federkern aus Faserkunststoffverbundmaterial, wobei der Federkern mindestens zwei in entgegengesetzter Richtung verlaufende Federschenkelabschnitte aufweist, die über einen dazwischen angeordneten Umlenkungsbereich verbunden sind, in welchem sich der Verlauf des Federkerns verändert, so dass ein mäanderförmiger Federkern gebildet wird, wobei an dem Federkern mindestens ein Federverstärkungselement derart angeordnet ist, dass bei einer bestimmungsgemäßen Verformung des Biegefederelements durch das Federverstärkungselement ein Mindestabstand zwischen zwei in benachbart angeordneten Federschenkelabschnitten vorgegeben wird.

Biegefederelemente aus Faserkunststoffverbundmaterial weisen im Vergleich zu Biegefederelementen aus Metall zahlreiche vorteilhafte Eigenschaften auf. Ein für viele Anwendungen interessanter Vorteil ist das geringe Eigengewicht eines Biegefederelements aus Faserkunststoffverbundmaterial, welches bei vergleichbaren Federeigenschaften deutlich leichter als ein Biegefederelement aus Metall mit vergleichbaren Federeigenschaften sein kann. Nicht nur aus diesem Grund werden Biegefederelemente aus Faserkunststoffverbundmaterial zunehmend auch im Fahrzeugbau eingesetzt.

Es sind Biegefederelemente bekannt, die sich im Wesentlichen entlang einer Raumrichtung erstrecken und dabei einen geradlinigen oder S-förmigen Verlauf aufweisen. Derartige Federelemente benötigen oftmals in der betreffenden Raumrichtung eine relativ große Erstreckung, um die bei einer belastungsbedingten Verformung gewünschte Federkraft erzeugen zu können. Es sind beispielsweise Aus EP 2 990 684 A1 auch mäanderförmig ausgestaltete Biegefederelemente bekannt, bei denen der aus einem geeigneten Faserkunststoffverbundmaterial bestehende Federkern mäanderförmig ausgestaltet ist und mehrere Federschenkelabschnitte üblicherweise quer oder in einem Winkel zu einer bestimmungsgemäßen Verformungsrichtung angeordnet sind. Auf Grund der mehreren Federschenkelabschnitte und der dazwischen angeordneten Umlenkungsbereiche kann bei einem derartigen mäanderförmig ausgestalteten Biegefederelement eine vergleichsweise große Federkraft bei vergleichsweise geringen Abmessungen des Biegefederelements erzeugt werden.

Es hat sich gezeigt, dass derartige Biegefederelemente aus Faserkunststoffverbundmaterial durch die jeweilige Formgebung des Federkerns eine in Abhängigkeit der jeweiligen Anforderungen vorteilhaft vorgegebene Federkennlinie aufweisen können, wobei eine der belastungsbedingten Verformung des Biegefederelements entgegenwirkende Federkraft sowohl degressiv als auch linear ansteigend oder progressiv ansteigend vorgegeben werden kann. Allerdings sollte vermieden werden, dass einander zugewandte Oberflächen des Federkerns, beispielsweise Außenflächen von benachbart angeordneten Federschenkelabschnitten aneinander anliegen oder gegebenenfalls sogar mit einem hohen Anpressdruck aneinander angedrückt werden, wenn eine große Belastung auf das Biegefederelement einwirkt und das Biegefederelement stark verformt wird. Es hat sich herausgestellt, dass die üblicherweise verwendeten Faserkunststoffverbundmaterialien die während einer bestimmungsgemäßen Verformung auftretenden Biegebelastungen auch über eine große Nutzungsdauer bzw. eine große Anzahl von Verformungsvorgängen aushalten können, während im Gegensatz dazu eine Druckbelastung des Faserkunststoffverbundmaterials des Federkerns vergleichsweise rasch und bei geringen Druckkräften zu einer übermäßigen Beanspruchung und gegebenenfalls Beschädigung des Federkerns führen kann.

Aus diesem Grund wird es oftmals als vorteilhaft oder sogar notwendig erachtet, ein Biegefederelement mit einem mäanderförmig ausgebildeten Federkern mit einer gesonderten Federeinrichtung oder Dämpfereinrichtung zu kombinieren, mit welcher verhindert wird, dass das Biegefederelement durch eine äußere Belastung übermäßig verformt wird und dabei benachbarte Federschenkelabschnitte aneinander angepresst werden.

In DE 10 2008 036 445 A1 ist ein schraubenförmiges Biegefederelement beschrieben, welches teilweise oder vollständig in eine schützende Umhüllung eingebettet ist. In US 4,763,882 ist ein ebenfalls schraubenförmiges Biegefederelement beschrieben, welches vollständig in eine Umhüllung aus einem elastischen Material eingebettet ist, um die Federeigenschaften des Biegefederelements zu beeinflussen. Ein in JP S57 69125 A beschriebenes schraubenförmiges Biegefederelement weist eine teilweise Bedeckung oder Umhüllung auf.

Beispielsweise aus WO 85/00207 A1 oder aus DE 10 2013 223 038 A1 sind mäanderförmige Biegefederelemente bekannt, bei denen an dem Federkern zusätzliche Federverstärkungselemente angeordnet sind, mit welchen die bei einer belastungsbedingten Verformung des Biegefederelements entgegenwirkende Federkraft beeinflusst und verändert wird. Dabei wird bei dem in WO 85/00207 A1 beschriebenen Biegefederelement in Verformungsabschnitten des Biegefederelements ein Elastomermaterial angeordnet, durch welches bei einer belastungsbedingten Verformung die der Verformung entgegenwirkende Federkraft zunimmt. In DE 10 2013 223 038 A1 ist ein Biegefederelement beschrieben, bei welchem entlang des Biegefederelements mehrere aus einem Elastomer gebildete Anschlagkörper derart angeordnet sind, dass die Anschlagkörper bei einer Stauchung des Biegefederelements um ein vorgebbares Ausmaß in Kontakt miteinander gelangen und einer weiteren Verformung zusätzlich entgegenwirken.

Es wird als eine Aufgabe der vorliegenden Erfindung angesehen, ein Biegefederelement der eingangs genannten Gattung so auszugestalten, dass mit möglichst einfachen und kostengünstigen Mitteln das Risiko einer unerwünschten Beeinträchtigung der Funktion oder gar einer Beschädigung des Biegefederelements reduziert werden kann.

Diese Aufgabe wird erfindungsgemäß durch ein Biegefederelement mit den Merkmalen des vorliegenden Anspruchs 1 gelöst.

Durch die Umhüllung aus einem Umhüllungsmaterial wird das Faserkunststoffverbundmaterial des Biegefederelements von unerwünschten Umgebungseinflüssen abgeschirmt. Die Umhüllung kann beispielsweise verhindern, dass das Faserkunststoffverbundmaterial mit Partikeln wie beispielsweise Schmutzpartikeln oder mit einfallendem UV-Licht in Kontakt kommt. Durch eine geeignete Wahl des Umhüllungsmaterials kann auch erreicht werden, dass das Faserkunststoffverbundmaterial vor Wasser und vor eindringender Feuchtigkeit geschützt wird. Da der Elastizitätsmodul des Umhüllungsmaterials geringer und vorzugsweise deutlich geringer als der Elastizitätsmodul des Faserkunststoffverbundmaterials ist, werden durch die Umhüllung die Federeigenschaften des Faserkunststoffverbundmaterials und der daran angeordneten Federverstärkungselemente und damit die angestrebten Federeigenschaften des Biegefederelements nicht merklich beeinflusst.

Erfindungsgemäß ist vorgesehen, dass mindestens an zwei in entgegengesetzter Richtung verlaufenden Federschenkelabschnitten jeweils mindestens ein Federverstärkungselement so angeordnet ist, dass bei einer bestimmungsgemäßen Verformung des Biegefederelements die einander zugeordneten Federverstärkungselemente an einander zugeordneten Federschenkelabschnitten aneinander anliegen und die Federkraft bei einer weiteren Verformung des Biegefederelements erhöhen. Durch die aneinander anliegenden und von den benachbarten Federschenkelabschnitten zusammengedrückten Federverstärkungselemente kann die Federkraft des Biegefederelements merklich erhöht werden, so dass die einander zugewandten Federverstärkungselemente bei einem Zusammendrücken des Biegefederelements miteinander in Kontakt kommen und aneinander anliegen. Die Federverstärkungselemente können dabei je nach Material und Formgebung eine kontinuierlich zunehmende oder aber auch eine sprunghaft ansteigende Federkraft erzeugen.

Erfindungsgemäß ist vorgesehen, dass das Umhüllungsmaterial ein Kunststoffschaum ist. Es sind verschiedene Kunststoffmaterialien bekannt, die kostengünstig hergestellt und aufgeschäumt werden können. Ein geeignetes Kunststoffmaterial ist möglichst lichtundurchlässig, beziehungsweise undurchlässig gegenüber UV-Licht und bewirkt einen möglichst effizienten Schutz vor mechanischen Einflüssen und Beanspruchungen. Es sind verschiedene Kunststoffmaterialien bekannt, die dauerhaft den beispielsweise bei Fahrzeugen üblicherweise auftretenden Beanspruchungen des Biegefederelements und den üblicherweise vorherrschenden Umgebungsbedingungen standhalten können.

Ein geeigneter Kunststoffschaum weist ein sehr geringes Eigengewicht auf, so dass auch bei einer voluminösen Umhüllung des Faserkunststoffverbundmaterials das Gesamtgewicht des Biegefederelements nicht merklich erhöht wird.

Beispielsweise kann ein Federverstärkungselement, welches bei einer bestimmungsgemäßen Druckbelastung oder auch bei einer hohen Druckbelastung nicht nahezu vollständig zusammengedrückt werden kann und zwischen zwei benachbarten Federschenkelabschnitten angeordnet und festgelegt ist, zuverlässig verhindern, dass sich die einander zugewandten Außenflächen der benachbarten Federschenkelabschnitte berühren und dadurch der Federkern beschädigt werden könnte. Das Federverstärkungselement weist dabei zweckmäßigerweise eine geringere Formstabilität bzw. ein niedrigeres Elastizitätsmodul als das Faserkunststoffverbundmaterial des Federkerns auf, um diesen nicht zu beschädigen. Weiterhin sollte eine Kontaktfläche des Federverstärkungselements, mit welcher das Federverstärkungselement an dem Federkern anliegt, an die Formgebung des Federkerns angepasst sein und insbesondere keine vorspringenden Ausformungen oder scharfkantigen Ränder aufweisen, durch welche bei einem Andrücken des Federverstärkungselements an den Federkern räumlich eng begrenzte Belastungsspitzen erzeugt werden, die zu einer Beschädigung des Federkerns führen könnten.

Das mindestens eine Federverstärkungselement besteht zweckmäßigerweise aus einem Material mit einem geringeren Elastizitätsmodul als das Faserkunststoffverbundmaterial, aus welchem der Federkern hergestellt ist. Der Elastizitätsmodul des Materials des Federverstärkungselements ist in vorteilhafter Weise deutlich geringer, beispielsweise eine Größenordnung geringer als der Elastizitätsmodul des Faserkunststoffverbundmaterials des Federkerns, um eine Beschädigung des Federkerns durch harte Bereiche des Federverstärkungselements zu vermeiden. Es ist ebenfalls möglich, dass ein Federverstärkungselement einen harten Kern aus einem Material mit einem hohen Elastizitätsmodul sowie eine weiche Umhüllung oder zumindest dem Federkern zugewandte Beschichtung aus einem Material mit einem niedrigeren Elastizitätsmodul aufweist.

Erfindungsgemäß ist vorgesehen, dass an dem Federkern mehrere Federverstärkungselemente derart angeordnet sind, dass sich bei einer bestimmungsgemäßen Verformung des Biegefederelements die Federkraft erhöht. Mit geeignet ausgestalteten und angeordneten Federverstärkungselementen kann erreicht werden, dass eine durch den Federkern aus Faserkunststoffverbundmaterial und durch dessen Formgebung vorgegebene Kennlinie des Biegefederelements in vorteilhafter Weise beeinflusst werden kann. So können die Federverstärkungselemente beispielsweise derart angeordnet sein, dass sich die Federkraft erst verändert und erhöht, nachdem das Biegefederelement über einen Schwellenwert hinaus verformt ist. In einem Verformungsbereich unterhalb des Schwellenwerts kann das Biegefederelement je nach Ausgestaltung eine degressive, eine lineare oder eine progressive Federkennlinie aufweisen. Bei einer Verformung des Biegefederelements über einen Schwellenwert hinaus, kann durch die Federverstärkungselemente erreicht werden, dass die Federkraft bei einer geringfügigen weiteren Verformung stark zunimmt und dadurch eine übermäßige Verformung des Biegefederelements vermieden werden kann. Die Federverstärkungselemente können die Federkennlinie ebenso verändern wie eine Kombination des Biegefederelements mit einer zusätzlichen Federeinrichtung oder mit einer Dämpfereinrichtung, mit welchen beispielsweise ein plötzlicher Endanschlag des Biegefederelements bei einer maximalen Verformung vermieden oder zumindest abgemildert werden kann.

Die Federverstärkungselemente können eine Formgebung aufweisen, die an die bestimmungsgemäße Verformung des Biegefederelements sowie an die angestrebte Federkennlinie angepasst ist.

In gleicher Weise kann optional ebenfalls vorgesehen sein, dass mindestens an zwei bei einer bestimmungsgemäßen Verformung des Biegefederelements benachbarten Umlenkungsbereichen jeweils ein Federverstärkungselement so angeordnet ist, dass bei einer bestimmungsgemäßen Verformung des Biegefederelements die einander zugeordneten Federverstärkungselemente an benachbarten Umlenkungsbereichen aneinander anliegen und die Federkraft bei einer weiteren Verformung des Biegefederelements erhöhen. Es ist dabei in Abhängigkeit von dem zur Verfügung stehenden Bauraum und den angestrebten Federeigenschaften möglich, die Federverstärkungselemente entweder im Bereich der Federschenkelabschnitte oder im Bereich der Umlenkungsbereiche anzuordnen. Es ist auch ein regelmäßiger oder ein unregelmäßiger Wechsel der Anordnung der einzelnen Federverstärkungselemente im Bereich der Federschenkelabschnitte oder an den Umlenkungsbereichen denkbar.

Im Hinblick auf eine möglichst große Steigerung der Federkraft durch die Federverstärkungselemente ist es gemäß einer Ausgestaltung des Erfindungsgedankens optional vorgesehen, dass das Biegefederelement mehr als zwei jeweils zueinander in entgegengesetzte Richtungen verlaufende Federschenkelabschnitte aufweist, und dass die an den Federschenkelabschnitten und/oder an den Umlenkungsbereichen angeordneten Federverstärkungselemente in einer Verformungsrichtung jeweils überlappend oder deckungsgleich angeordnet sind, so dass bei einer ausreichenden Verformung des Biegefederelements die längs der Verformungsrichtung angeordneten Federverstärkungselemente und dazwischen liegende Abschnitte des Federkerns jeweils aneinander anliegen.

Auf diese Weise wird die Federkraft des Biegefederelements nicht nur durch jeweils zwei einander zugeordnete Federverstärkungselemente beeinflusst, die in Abhängigkeit von der Verformung des Biegefederelements in Kontakt treten und die Federkraft erhöhen, sondern darüber hinaus eine Verbundwirkung mehrerer Federverstärkungselemente ermöglicht, die in der Verformungsrichtung entlang einer Linie bzw. zumindest teilweise überlappend angeordnet sind und einen durch die Federverstärkungselemente hindurch wirkenden Kraftschluss bewirken, der bei einer weiteren Verformung des Biegefederelements die dadurch erzeugte Federkraft maßgeblich beeinflusst und gegebenenfalls dominiert.

Die Umhüllung kann beispielsweise aus einem flexiblen Textilmaterial bestehen. Es ist ebenfalls möglich, dass die Umhüllung aus einem geeigneten Kunststoffmaterial hergestellt ist. Die Umhüllung kann lösbar an dem Faserkunststoffverbundmaterial angeordnet sein. Es ist ebenfalls denkbar und für viele Anwendungsbereiche vorteilhaft, dass die Umhüllung dauerhaft an dem Faserkunststoffverbundmaterial angeordnet und mit diesem verbunden ist.

Im Hinblick auf eine möglichst geringe Beeinflussung der angestrebten Federeigenschaften des Biegefederelements ist es optional vorgesehen, dass der Elastizitätsmodul des Umhüllungsmaterials weniger als 5 % und vorzugsweise weniger als 1 % des Elastizitätsmoduls des Faserkunststoffverbundmaterials beträgt.

Einer Ausgestaltung des Erfindungsgedankens zufolge ist vorgesehen, dass das Umhüllungsmaterial ein Kunststoffschaum ist. Es sind verschiedene Kunststoffmaterialien bekannt, die kostengünstig hergestellt und aufgeschäumt werden können. Ein geeignetes Kunststoffmaterial ist möglichst lichtundurchlässig, beziehungsweise undurchlässig gegenüber UV-Licht und bewirkt einen möglichst effizienten Schutz vor mechanischen Einflüssen und Beanspruchungen. Es sind verschiedene Kunststoffmaterialien bekannt, die dauerhaft den beispielsweise bei Fahrzeugen üblicherweise auftretenden Beanspruchungen des Biegefederelements und den üblicherweise vorherrschenden Umgebungsbedingungen standhalten können.

Ein geeigneter Kunststoffschaum weist ein sehr geringes Eigengewicht auf, so dass auch bei einer voluminösen Umhüllung des Faserkunststoffverbundmaterials das Gesamtgewicht des Biegefederelements nicht merklich erhöht wird.

Gemäß einer Ausgestaltung des Erfindungsgedankens ist vorgesehen, dass das Umhüllungsmaterial ein offenporiger Kunstschaumstoff ist. Ein offenporiger Kunststoffschaum kann ein sehr kleines Elastizitätsmodul aufweisen und sehr leicht verformbar sein.

Vorzugsweise ist vorgesehen, dass das Umhüllungsmaterial ein geschlossenporiger Kunstschaumstoff ist. Ein geschlossenporiger Kunstschaumstoff kann wasserabweisend ausgebildet sein, da die geschlossenen Poren des Kunstschaumstoffs kein Wasser und auch keine Feuchtigkeit aufnehmen. Im Hinblick auf ein möglichst geringes Eigengewicht und eine leichte Verformbarkeit, durch welche die Eigenschaften des Biegefederelements nicht nachteilig beeinflusst werden, ist es zweckmäßig, dass der Kunststoffschaum möglichst große Poren mit einem mittleren Porendurchmesser von mehr als 1 mm, vorzugsweise von mehr als 2 mm oder sogar von mehr als 5 mm aufweist.

Es ist gemäß einer vorteilhaften Ausgestaltung des Erfindungsgedankens auch möglich, dass das Umhüllungsmaterial ein Polyurethan-Schaum oder ein Polyurethan-Gel ist. Polyurethan als wesentliche Komponente der Umhüllung weist verschiedene vorteilhafte Eigenschaften auf. Ein Polyurethan-Schaum oder ein Polyurethan-Gel lassen sich kostengünstig herstellen und einfach verarbeiten beziehungsweise in einfacher Weise dauerhaft mit dem Kunststofffaserverbundmaterial des Biegefederelements verbinden.

Einer ganz besonders vorteilhaft erachteten Ausgestaltung des Erfindungsgedankens zufolge ist vorgesehen, dass ein Zwischenraum zwischen zwei in entgegengesetzter Richtung verlaufenden Federschenkelabschnitten vollständig mit dem Umhüllungsmaterial ausgefüllt ist, so dass ein unerwünschtes Eindringen von Partikeln in diesen Zwischenraum verhindert werden kann. Während das Faserkunststoffverbundmaterial im Wesentlichen mäanderförmig ausgebildet ist, kann die umgebende Umhüllung eine näherungsweise quaderförmige Formgebung aufweisen. Auf diese Weise kann ausgeschlossen werden, dass größere Partikel in einen Zwischenraum zwischen zwei entgegengesetzt verlaufende Federschenkelabschnitte eindringen und bei einer bestimmungsgemäßen Verformung des Biegefederelements, wobei sich die benachbarten Federschenkelabschnitte annähern und möglicherweise sogar in Kontakt kommen, zwischen einander zugewandten Oberflächen der Federschenkelabschnitte eingeklemmt werden und punktuell große mechanische Belastungsspitzen erzeugen, wenn die Federschenkelabschnitte aneinander angedrückt werden. Das Problem kann durch eine geeignete Formgebung einer den Umgebungsbedingungen ausgesetzten Oberfläche der Umhüllung weitgehend reduziert werden, um auch eine Beeinträchtigung des Umhüllungsmaterials durch Schmutz oder Nässe möglichst gering zu halten.

Nachfolgend werden verschiedene Ausführungsbeispiele des Erfindungsgedankens näher erläutert, die in der Zeichnung exemplarisch dargestellt sind. Es zeigt:
Fig. 1 eine Schnittansicht eines erfindungsgemäßen Biegefederelements mit mehreren in entgegengesetzter Richtung verlaufenden Federschenkelabschnitten, die jeweils über einen Umlenkungsbereich miteinander verbunden sind, wobei die einzelnen Federverstärkungselemente jeweils in Umlenkungsbereichen zwischen benachbarten Federschenkelabschnitten angeordnet sind, wobei ein Federkern des Biegefederelements zusammen mit den daran angeordneten Federverstärkungselementen zusätzlich von einer Umhüllung aus einem Umhüllungsmaterial mit einem kleinen Elastizitätsmodul umhüllt ist,
Fig. 2 eine Schnittansicht des in Fig. 1 dargestellten Biegefederelements längs einer Linie II-II in Fig. 1,
Fig. 3 eine Schnittansicht des in den Fig. 1 und 2 dargestellten Biegefederelements, wobei das Biegefederelement über einen Schwellenwert hinaus verformt ist und die einander zugeordneten Federverstärkungselemente aneinander anliegen und zusammengepresst sind und
Fig. 4 eine Schnittansicht des in Fig. 3 dargestellten Biegefederelements längs einer Linie IV-IV in Fig. 3.

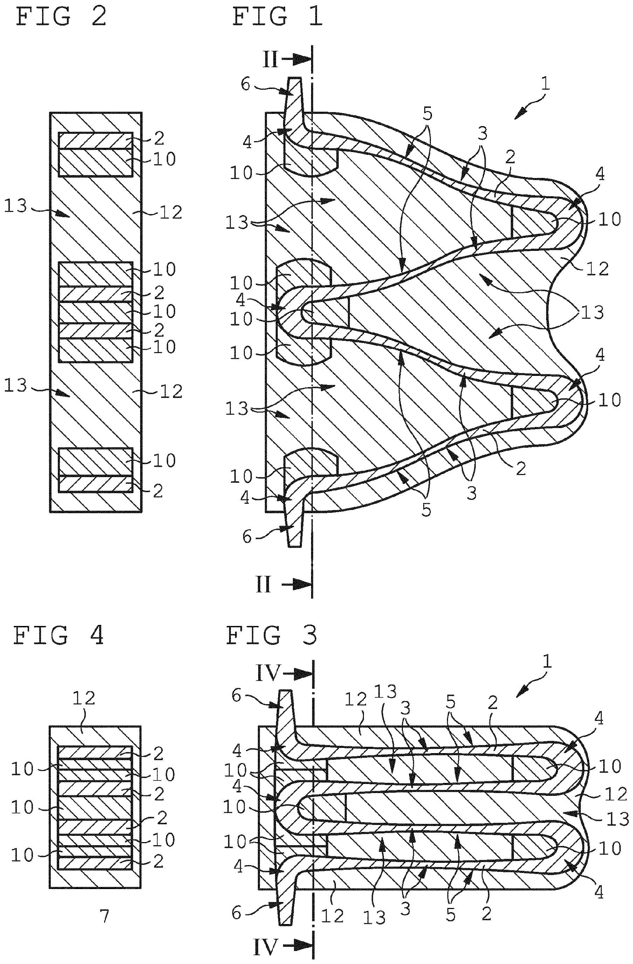

Ein in den Figuren 1 bis 4 exemplarisch dargestelltes Biegefederelement 1 weist einen mäanderförmig ausgebildeten Federkern 2 aus einem Faserkunststoffverbundmaterial auf. Bei dem Faserkunststoffverbundmaterial kann es sich um ein hinsichtlich der jeweiligen Anforderungen in geeigneter Weise ausgewähltes, bzw. vorgegebenes Faserkunststoffverbundmaterial mit einem geeigneten Kunststoffmatrixmaterial und mit darin eingebetteten Fasern handeln. Die eingebetteten Fasern können beispielsweise Glasfasern oder Kohlenstofffasern sein, wobei auch andere Fasermaterialien wie beispielsweise Basaltfasern denkbar und geeignet sein können. Die Fasern können eine an die jeweiligen Anforderungen hinsichtlich der Herstellung und Verarbeitung des Federkerns 2 und den bei einer bestimmungsgemäßen Verwendung üblicherweise auftretenden mechanischen Belastungen aufweisen, wobei es sich sowohl um quasi Endlos-Fasern als auch um mittellange oder sogar kurze Fasern mit einer Faserlänge von einigen Zentimetern oder sogar einigen Millimetern und weniger handeln kann.

Der Federkern 2 des Biegefaserelements 1 weist vier jeweils in entgegengesetzter Richtung verlaufende Federschenkelabschnitte 3 auf, von denen jeweils zwei benachbarte Federschenkelabschnitte 3 über einen dazwischen angeordneten Umlenkungsbereich 4 miteinander verbunden sind. Die einzelnen Federschenkelabschnitte 3 weisen jeweils eine S-förmige Formgebung bzw. einen in einer Seitenansicht S-förmigen Verlauf auf. Die Federschenkelabschnitte 3 und die dazwischen angeordneten Umlenkungsbereiche 4 sind so ausgestaltet, dass bei einer bestimmungsgemäßen Belastung des Biegefederelements 1 in den Umlenkungsbereichen 4 keine nennenswerte Verformung stattfindet, und die Federschenkelabschnitte 3 in einem jeweils mittleren Bereich 5 verformt werden und dabei eine der von außen einwirkenden Belastung entgegengesetzte Federkraft erzeugen.

Derartige Biegefederelemente 1 können beispielsweise bei Fahrzeugen im Bereich der Radaufhängungen verwendet werden. Es sind auch andere Geometrien oder eine hiervon abweichend ausgestaltete Formgebung von Federkernen 2 bzw. Biegefederelementen 1 denkbar, beispielsweise gradlinig oder S-förmig verlaufende Federkerne 2 oder vergleichbar mäander-förmig ausgestaltete Federkerne 2, die mehr oder weniger jeweils entgegengesetzt ausgerichtete Federschenkelabschnitte 3 aufweisen.

An entgegengesetzten Enden des Federkerns 2 münden die jeweiligen Umlenkungsbereiche 4 jeweils in einen Lagerabschnitt 6, der für die Aufnahme und Festlegung des Federkerns 2 in einer daran angepassten Lagereinrichtung 7 vorgesehen ist. Das in den Figuren dargestellte Biegefederelement 1 ist zwischen zwei einander gegenüberliegenden Lagereinrichtungen 7 festgelegt, wobei die Lagereinrichtungen 7 längs einer durch einen Pfeil 8 angedeuteten Verformungsrichtung relativ zueinander verlagert werden können und dabei eine Verformungskraft auf das Biegefederelement 1 ausüben. Die dadurch verursachte Verformung des Biegefederelements 1 erzeugt eine in entgegengesetzter Richtung der Verformung entgegenwirkende Federkraft.

Federverstärkungselemente 10 sind jeweils an den Außenflächen 9 des Federkerns 2 in den Umlenkungsbereichen 4 angeordnet. Das Material der Federverstärkungselemente 10 ist in geeigneter Weise so gewählt und vorgegeben, dass einerseits die gewünschte Veränderung der Federkennlinie des Federkerns 2 erreicht wird, andererseits aber eine durch einen Kontakt mit den Außenflächen 9 oder durch die bei einer starken Verformung einwirkenden Druckkräfte bedingte Beschädigung des Federkerns 2 möglichst ausgeschlossen werden kann. Diese Anforderungen können beispielsweise dadurch erfüllt werden, dass der Elastizitätsmodul des Materials der Federverstärkungselemente 10 geringer als der Elastizitätsmodul des Faserkunststoffverbundmaterials des Federkerns 2 ist. Die Federverstärkungselemente 10 können beispielsweise aus Gummi oder aber beispielsweise aus einem geeigneten Kunststoffmaterial mit einem Elastizitätsmodul von mehr als 1 GPa bestehen. Auch andere Materialien mit einem hiervon abweichenden Elastizitätsmodul sind denkbar.

Es ist ebenfalls denkbar, dass die Federverstärkungselemente 10 eine den Außenflächen des Federkerns 2 zugewandte bzw. gegebenenfalls auch dem zugeordneten benachbarten Federverstärkungselement 10 zugewandte Beschichtung aufweisen. Diese Beschichtung kann als Haftvermittler genutzt werden, um eine möglichst dauerhafte und zuverlässige Befestigung der einzelnen Federverstärkungselemente 10 an dem Federkern 2 zu unterstützen. Die Beschichtung kann auch ausreichend elastische Eigenschaften aufweisen, um eine mechanische Überbeanspruchung des Federkerns 2 bei einer starken Verformung des Biegefederelements 1 und einem daraus resultierenden Zusammenpressen der einzelnen Federverstärkungselemente 10 nach Möglichkeit zu verhindern.

Es ist ebenfalls denkbar, dass bei einer wiederum abweichenden Ausgestaltungsvariante eines Biegefederelements 1 sowohl an den Federschenkelabschnitten 3 als auch in den Umlenkungsbereichen 4 jeweils Federverstärkungselemente 10 angeordnet sind.

Der Federkern 2 ist im Wesentlichen vollständig, bzw. mit Ausnahme der Lagerabschnitte 6 von einer Umhüllung 12 umgeben. Die Umhüllung 12 schützt das Faserkunststoffverbundmaterial des Federkerns 2 vor Partikeln wie beispielsweise Schmutz oder Eis, die sich an einer Außenfläche 9 des Faserkunststoffverbundmaterials anlagern könnten und bei einer länger andauernden Beanspruchung das Faserkunststoffmaterial schwächen oder beschädigen könnten. Die Umhüllung 12 schützt das Faserkunststoffverbundmaterial auch vor beispielsweise Steinschlag oder anderen mechanischen Einwirkungen von außen. Zudem schützt die Umhüllung 12 das Faserkunststoffverbundmaterial des Federkerns 2 vor einer Exposition gegenüber Sonnenlicht uns insbesondere gegenüber einer für die mechanische Festigkeit des Faserkunststoffverbundmaterials eventuell schädlichen UV-Strahlung.

Die Umhüllung 12 besteht aus einem geeigneten Umhüllungsmaterial, das bei dem exemplarisch dargestellten Ausführungsbeispiel ein geschlossenporiger Kunststoffschaum aus Polyurethan ist. Ein Elastizitätsmodul eines solchen Umhüllungsmaterials beträgt beispielsweise deutlich weniger als 0,01 GPa und damit deutlich weniger als 1% eines Elastizitätsmoduls des Faserkunststoffverbundmaterials, aus welchem der Federkern 2 hergestellt ist.

Dies führt dazu, dass die Federeigenschaften und insbesondere die bei einer belastungsbedingten Verformung des Federkerns 2 erzeugte Federkraft, die der Verformung des Federkerns 2 entgegenwirkt, im Wesentlichen ausschließlich durch den Federkern 2 und durch die daran angeordneten Federverstärkungselemente 10 bewirkt wird und im Gegensatz dazu die Umhüllung 12 keinen nennenswerten Einfluss auf die Federeigenschaften hat. Gleichwohl wird durch die Umhüllung 12 ein einfacher, kostengünstiger und sehr effektiver Schutz des Federkerns 2 des Biegefederelements 1 bewirkt. Das Biegefederelement 1 kann mit der Umhüllung 12 auch in anspruchsvollen Umgebungsbedingungen eingesetzt werden und eignet sich deshalb in besonderer Weise auch zur Verwendung beim Fahrzeugbau an exponierten Bereichen eines Fahrzeugs. Die Umhüllung 12 füllt zweckmäßigerweise auch Zwischenräume 13 zwischen den einzelnen Federschenkelabschnitten 3 vollständig aus, sodass ein unerwünschtes Eindringen von Schmutzpartikeln oder anderen Partikeln zwischen einander zugewandten Oberflächen der Federschenkelabschnitte 3 in einfacher Weise ausgeschlossen werden kann.

Die Umhüllung 12 umgibt den Federkern 2 aus dem Kunststoffverbundmaterial bis zu den beiden Lagerabschnitten 6 und bildet in der Umgebung der Lagereinrichtungen 7 eine Abdichtung der betreffenden Lagereinrichtung 7, wodurch verhindert wird, dass in eventuelle Spalten und Schlitze zwischen den Lagereinrichtungen 7 und den darin aufgenommenen Lagerabschnitten 6 des Federkerns 2 Schmutz oder andere Partikel oder aber Feuchtigkeit eindringen kann, welche die zuverlässige Aufnahmen des Biegefederelements 1 in den Lagereinrichtungen 7 oder die Funktionsfähigkeit des Biegefederelements 1 beeinträchtigen könnten.

## Patentansprüche

1. Biegefederelement (1) mit einem Federkern (2) aus Faserkunststoffverbundmaterial, wobei der Federkern (2) mindestens zwei in entgegengesetzter Richtung verlaufende Federschenkelabschnitte (3) aufweist, die über einen dazwischen angeordneten Umlenkungsbereich (4) verbunden sind, in welchem sich der Verlauf des Federkerns (2) verändert, sodass ein mäanderförmiger Federkern (2) gebildet wird, wobei an dem Federkern (2) mindestens ein Federverstärkungselement (10) derart angeordnet ist, dass bei einer bestimmungsgemäßen Verformung des Biegefederelements durch das Federverstärkungselement ein Mindestabstand zwischen zwei in benachbart angeordneten Federschenkelabschnitten (3) vorgegeben wird, **dadurch gekennzeichnet, dass** das Faserkunststoffverbundmaterial des Federkerns (2) mindestens abschnittsweise eine Umhüllung (12) aus einem Umhüllungsmaterial aufweist, dessen Elastizitätsmodul geringer als der Elastizitätsmodul des Faserkunststoffverbundmaterials ist, dass das Umhüllungsmaterial ein Kunststoffschaum ist, dass ein Federverstärkungselement (10) derart angeordnet ist oder mehrere Federverstärkungselemente (10) derart angeordnet sind, dass sich bei einer bestimmungsgemäßen Verformung des Biegefederelements (1) die Federkraft erhöht, und dass mindestens an zwei in entgegengesetzter Richtung verlaufenden Federschenkelabschnitten (3) jeweils mindestens ein Federverstärkungselement (10) so angeordnet ist, dass bei einer bestimmungsgemäßen Verformung des Biegefederelements (1) die einander zugeordneten Federverstärkungselemente (10) an einander zugeordneten Federschenkelabschnitten (3) aneinander anliegen und die Federkraft bei einer weiteren Verformung des Biegefederelements (1) erhöhen.

2. Biegefederelement (1) nach Anspruch 1, **dadurch gekennzeichnet, dass** das mindestens eine Federverstärkungselement (10) aus Material mit einem Elastizitätsmodul besteht, welches geringer als der Elastizitätsmodul des Faserkunststoffverbundmaterials des Federkerns (2) ist.

3. Biegefederelement (1) nach einem der vorangehenden Ansprüche, **dadurch gekennzeichnet, dass** mindestens an zwei bei einer bestimmungsgemäßen Verformung des Biegefederelements (1) benachbarten Umlenkungsbereichen (4) jeweils ein Federverstärkungselement (10) so angeordnet ist, dass bei einer bestimmungsgemäßen Verformung des Biegefederelements (1) die einander zugeordneten Federverstärkungselemente (10) an benachbarten Umlenkungsbereichen (4) aneinander anliegen und die Federkraft bei einer weiteren Verformung des Biegefederelements (1) erhöhen.

4. Biegefederelement (1) nach einem der vorangehenden Ansprüche, **dadurch gekennzeichnet, dass** der Federkern (2) mehr als zwei jeweils zueinander in entgegengesetzter Richtung verlaufende Federschenkelabschnitte (3) aufweist, und dass die an den Federschenkelabschnitten (3) und/oder an den Umlenkungsbereichen (4) angeordneten Federverstärkungselemente (10) in einer Verformungsrichtung (8) jeweils überlappend oder deckungsgleich angeordnet sind, sodass bei einer ausreichenden Verformung des Biegefederelements (1) die längs der Verformungsrichtung (8) angeordneten Federverstärkungselemente (10) und dazwischen verlaufende Abschnitte des Federkerns (2) jeweils aneinander anliegen.

5. Biegefederelement (1) nach einem der vorangehenden Ansprüche, **dadurch gekennzeichnet, dass** der Elastizitätsmodul des Umhüllungsmaterials weniger als 5 % und vorzugsweise weniger als 1 % des Elastizitätsmoduls des Faserkunststoffverbundmaterials beträgt.

6. Biegefederelement (1) nach einem der vorangehenden Ansprüche, **dadurch gekennzeichnet, dass** das Umhüllungsmaterial ein offenporiger Kunststoffschaum ist.

7. Biegefederelement (1) nach einem der vorangehenden Ansprüche 1 bis 5, **dadurch gekennzeichnet, dass** das Umhüllungsmaterial ein geschlossenporiger Kunststoffschaum ist.

8. Biegefederelement (1) nach einem der vorangehenden Ansprüche, **dadurch gekennzeichnet, dass** das Umhüllungsmaterial ein Polyurethan-Schaum ist.

9. Biegefederelement (1) nach einem der vorangehenden Ansprüche, **dadurch gekennzeichnet, dass** ein Zwischenraum (13) zwischen zwei in entgegengesetzter Richtung verlaufenden Federschenkelabschnitten (3) vollständig mit dem Umhüllungsmaterial ausgefüllt ist, sodass ein unerwünschtes Eindringen von Partikeln in diesen Zwischenraum (13) verhindert werden kann.

10. Biegefederelement (1) nach Anspruch 1, **dadurch gekennzeichnet, dass** das Federverstärkungselement (10) einen harten Kern aus einem Material mit einem hohen Elastizitätsmodul sowie eine weiche Umhüllung oder zumindest dem Federkern zugewandte Beschichtung aus einem Material mit einem niedrigeren Elastizitätsmodul aufweist.

## Claims

1. Flexing spring element (1), comprising a spring core (2) made of a fibre plastics composite material, wherein the spring core (2) comprises at least two spring leg portions (3) which extend in the opposite direction and which are connected via a deflection region (4) arranged therebetween, in which the course of the spring core (2) changes, such that a meandering spring core (2) is formed, wherein at least one spring reinforcing element (10) is arranged on the spring core (2) in such a way that, in the case of deformation as intended of the flexing spring element, the spring reinforcing element predetermines a minimum spacing between two adjacently arranged spring leg portions (3), **characterised in that** the fibre plastics composite material of the spring core (2) comprises a casing (12), at least in portions, made of a casing material, the modulus of elasticity of which is lower than the modulus of elasticity of the fibre plastics composite material, **in that** the casing material is a plastics foam, **in that** a spring reinforcing element (10) is arranged or a plurality of spring reinforcing elements (10) is arranged such that, in the case of deformation as intended of the flexing spring element (1) the spring force increases, and **in that** in each case at least one spring reinforcing element (10) is arranged at least on two spring leg portions (3) extending in opposite directions in such a way that, in the case of deformation as intended of the flexing spring element (1), the mutually associated spring reinforcing elements (10) rest on one another on mutually associated spring leg portions (3) and increase the spring force in the case of further deformation of the flexing spring element (1).

2. Flexing spring element (1) according to claim 1, **characterised in that** the at least one spring reinforcing element (10) consists of material having a modulus of elasticity that is less than the modulus of elasticity of the fibre plastics composite material of the spring core (2).

3. Flexing spring element (1) according to any one of the preceding claims, **characterised in that** in each case a spring reinforcing element (10) is arranged at least at two deflection regions (4) that are adjacent in the case of deformation as intended of the flexing spring element (1) in such a way that in the case of deformation as intended of the flexing spring element (1) the mutually associated spring reinforcing elements (10) rest on one another at adjacent deflection regions (4) and increase the spring force in the case of further deformation of the flexing spring element (1).

4. Flexing spring element (1) according to any one of the preceding claims, **characterised in that** the spring core (2) comprises more than two spring leg portions (3) that extend in each case in opposite directions from one another, and **in that** the spring reinforcing elements (10) arranged on the spring leg portions (3) and/or on the deflection regions (4) are in each case arranged in an overlapping or congruent manner in a deformation direction (8), such that in the case of a sufficient deformation of the flexing spring element (1) the spring reinforcing elements (10) arranged along the deformation direction (8) and portions of the spring core (2) extending therebetween rest against one another in each case.

5. Flexing spring element (1) according to any one of the preceding claims, **characterised in that** the modulus of elasticity of the casing material is less than 5% and preferably less than 1% of the modulus of elasticity of the fibre plastics composite material.

6. Flexing spring element (1) according to any one of the preceding claims, **characterised in that** the casing material is an open-cell plastics foam.

7. Flexing spring element (1) according to any claims 1 to 5, **characterised in that** the casing material is a closed-cell plastics foam.

8. Flexing spring element (1) according to any one of the preceding claims, **characterised in that** the casing material is a polyurethane foam.

9. Flexing spring element (1) according to any one of the preceding claims, **characterised in that** an intermediate space (13) between two spring leg portions (3) extending in opposite directions is filled completely with the casing material, such that an undesired penetration of particles into said intermediate space (13) can be prevented.

10. Flexing spring element (1) according to claim 1, **characterised in that** the spring reinforcing element (10) comprises a hard core made of a material having a high modulus of elasticity, and a soft casing or a coating at least facing the spring core, of a material having a lower modulus of elasticity.

## Revendications

1. Élément élastique de flexion (1) avec un noyau élastique (2) en matériau composite en matière plastique fibreuse, le noyau élastique (2) présentant au moins deux sections de branche élastiques (3) s'étendant dans des directions opposées, qui sont reliées par l'intermédiaire d'une zone de déviation (4) agencée entre elles, dans laquelle le tracé du noyau élastique (2) se modifie, de telle sorte qu'un noyau élastique (2) en forme de méandres est formé, au moins un élément de renforcement élastique (10) étant agencé sur le noyau élastique (2) de telle sorte que, lors d'une déformation conforme à l'usage prévu de l'élément élastique de flexion, l'élément de renforcement élastique prédétermine une distance minimale entre deux sections de branche élastiques (3) agencées de manière voisine, **caractérisé en ce que** le matériau composite en matière plastique fibreuse du noyau élastique (2) présente au moins par sections une enveloppe (12) en un matériau d'enveloppe, dont le module d'élasticité est inférieur au module d'élasticité du matériau composite en matière plastique fibreuse, **en ce que** le matériau d'enveloppe est une mousse de matière plastique, **en ce qu'**un élément de renforcement élastique (10) est agencé de telle sorte ou plusieurs éléments de renforcement élastique (10) sont agencés de telle sorte que, lors d'une déformation conforme à l'usage prévu de l'élément élastique de flexion (1), la force élastique augmente, et **en ce qu'**au moins un élément de renforcement élastique (10) est agencé sur au moins deux sections de branche élastiques (3) s'étendant dans des directions opposées de telle sorte que, lors d'une déformation conforme à l'usage prévu de l'élément élastique de flexion (1), les éléments de renforcement élastique (10) associés les uns aux autres s'appliquent les uns contre les autres sur des sections de branche élastiques (3) associées les unes aux autres et augmentent la force élastique lors d'une autre déformation de l'élément élastique de flexion (1).

2. Élément élastique de flexion (1) selon la revendication 1, **caractérisé en ce que** l'au moins un élément de renforcement élastique (10) est constitué de matériau ayant un module d'élasticité qui est inférieur au module d'élasticité du matériau composite en matière plastique fibreuse du noyau élastique (2).

3. Élément élastique de flexion (1) selon l'une quelconque des revendications précédentes, **caractérisé en ce qu'**un élément de renforcement élastique (10) est agencé respectivement sur au moins deux zones de déviation (4) voisines lors d'une déformation conforme à l'usage de l'élément élastique de flexion (1) de telle sorte, que, lors d'une déformation conforme à l'usage de l'élément élastique de flexion (1), les éléments de renforcement élastique (10) associés les uns aux autres s'appliquent les uns contre les autres dans des zones de déviation (4) voisines et augmentent la force élastique lors d'une autre déformation de l'élément élastique de flexion (1).

4. Élément élastique de flexion (1) selon l'une quelconque des revendications précédentes, **caractérisé en ce que** le noyau élastique (2) présente plus de deux sections de branche élastiques (3) s'étendant respectivement l'une par rapport à l'autre dans des directions opposées, et **en ce que** les éléments de renforcement élastique (10) agencés sur les sections de branche élastiques (3) et/ou sur les zones de déviation (4) sont agencés respectivement en chevauchement ou en recouvrement dans une direction de déformation (8), de telle sorte que, lors d'une déformation suffisante de l'élément élastique de flexion (1), les éléments de renforcement élastique (10) agencés le long de la direction de déformation (8) et les sections du noyau élastique (2) s'étendant entre eux s'appliquent respectivement les uns contre les autres.

5. Élément élastique de flexion (1) selon l'une quelconque des revendications précédentes, **caractérisé en ce que** le module d'élasticité du matériau d'enveloppe est inférieur à 5 % et de préférence inférieur à 1 % du module d'élasticité du matériau composite en matière plastique fibreuse.

6. Élément élastique de flexion (1) selon l'une quelconque des revendications précédentes, **caractérisé en ce que** le matériau d'enveloppe est une mousse de matière plastique à pores ouverts.

7. Élément élastique de flexion (1) selon l'une quelconque des revendications 1 à 5, **caractérisé en ce que** le matériau d'enveloppe est une mousse de matière plastique à pores fermés.

8. Élément élastique de flexion (1) selon l'une quelconque des revendications précédentes, **caractérisé en ce que** le matériau d'enveloppe est une mousse de polyuréthane.

9. Élément élastique de flexion (1) selon l'une quelconque des revendications précédentes, **caractérisé en ce qu'**un espace intermédiaire (13) entre deux sections de branche élastiques (3) s'étendant dans des directions opposées est entièrement rempli avec le matériau d'enveloppe, de telle sorte qu'une pénétration indésirable de particules dans cet espace intermédiaire (13) peut être empêchée.

10. Élément élastique de flexion (1) selon la revendication 1, **caractérisé en ce que** l'élément de renforcement élastique (10) présente un noyau dur en un matériau ayant un module d'élasticité élevé ainsi qu'une enveloppe souple ou au moins un revêtement tourné vers le noyau élastique en un matériau ayant un module d'élasticité plus faible.
